# EUROPEAN PATENT APPLICATION

(11) **EP 4 797 144 A1**
(43) Date of publication of application: **26.08.2026**
(21) Application number: 24890191.0
(22) Date of filing: 31.07.2024
(51) Int. Cl.: G06F 30/20, G06F 119/02

(54) **PREDICTION MODEL CONSTRUCTION METHOD AND APPARATUS, AND PREDICTION MODEL CALLING METHOD AND APPARATUS**

(30) Priority: 13.11.2023 CN 202311514572
(71) Applicant: HUAWEI TECHNOLOGIES CO., LTD., Shenzhen 518129 (CN)
(72) Inventor: RAO, Zhongwen, Shenzhen, Guangdong 518129 (CN); PAN, Lujia, Shenzhen, Guangdong 518129 (CN); QI, Shiyi, Shenzhen, Guangdong 518055 (CN); LI, Yiduo, Shenzhen, Guangdong 518055 (CN)
(74) Representative: Pfenning, Meinig & Partner mbB
(86) International application number: PCT/CN2024/108811
(87) International publication number: WO 2025/102827

(57) **Abstract**

Embodiments of this application provide a method and an apparatus for constructing a prediction model, and a method and an apparatus for calling a prediction model. In a modeling process of the prediction model used to predict a multivariate time series, information interaction is performed in different dimensions, to enrich information content in the multivariate time series. In addition, in an information interaction process, noise generated between dimensions and noise inherent in the dimensions are suppressed, so that a prediction model with higher prediction precision is obtained. In a process of predicting the multivariate time series, the prediction model can perform sufficient information interaction on the multivariate time series, and can suppress various noise, thereby obtaining a more accurate prediction result. This provides a reliable basis for making a reasonable decision based on the prediction result.

## Description

This application claims priority to Chinese Patent Application No. 202311514572.7, filed with the China National Intellectual Property Administration on November 13, 2023 and entitled "METHOD AND APPARATUS FOR CONSTRUCTING PREDICTION MODEL, AND METHOD AND APPARATUS FOR CALLING PREDICTION MODEL", which is incorporated herein by reference in its entirety.

### TECHNICAL FIELD

This application relates to the field of computer technologies, and in particular, to a method and an apparatus for constructing a prediction model, and a method and an apparatus for calling a prediction model.

### BACKGROUND

A multivariate time series (which may also be referred to as a multi-variable time series or a multi-feature time series) is data formed by a plurality of features collected in chronological order. For example, a device A includes a temperature sensor 1, a vibration sensor, ..., and a sensor 10. Data of each sensor is collected every hour within 24 hours, to obtain a multivariate time series that may be represented as a matrix A with a scale of 24*10. aij in the matrix A may indicate data collected by a sensor j of the device A at sampling time corresponding to i, where i=1, 2, ..., 24, and j=1, 2,..., 10. There is usually a specific association relationship between "variates" in the multivariate time series. Therefore, prediction of the multivariate time series is of great significance to actual production and life. Prediction of the multivariate time series refers to learning a change rule of a plurality of related variables over time, to predict future states of the plurality of variables. A more accurate prediction result indicates a more reasonable decision that can be made based on the prediction result. Therefore, implementing accurate prediction of the multivariate time series is a research direction worth studying.

Currently, noise suppression is not considered during prediction of the multivariate time series, and the prediction result is not accurate enough due to noise interference. Even if noise interference is considered and noise is suppressed, for example, in a Dlinear model, different variables need to be split, and corresponding prediction models need to be respectively constructed. Such a prediction model cannot accurately predict the multivariate time series. In addition, the noise caused by interaction between the different variables is suppressed only by respectively modeling different variables, and noise included in each variable cannot be suppressed. As a result, the prediction result is still inaccurate.

In view of this, a prediction model that can accurately predict states of a plurality of "variates" in the multivariate time series in the future needs to be provided urgently, so that a reasonable decision can be made based on an accurate prediction result.

### SUMMARY

In view of this, this application provides a method and an apparatus for constructing a prediction model, and a method and an apparatus for calling a prediction model. A constructed prediction model can accurately predict a multivariate time series, to provide a reliable data basis for making a reasonable decision.

According to a first aspect, this application provides a method for constructing a prediction model. The prediction model in the method is used to predict a multivariate time series. A construction process of the prediction model may include: performing information interaction in different dimensions to enrich information content in the multivariate time series; and moreover, suppressing noise generated between dimensions and noise inherent in the dimensions in an information interaction process, to ensure higher prediction precision of the constructed prediction model. In an example, the method for constructing the prediction model may include: first, obtaining a plurality of first training samples, where each of the plurality of first training samples includes a first multivariate time series and a second multivariate time series, and the second multivariate time series is a multivariate time series collected after the first multivariate time series in a first training sample to which the second multivariate time series belongs; and then, obtaining the prediction model based on the first multivariate time series, the second multivariate time series, an initial model, and an information bottleneck constraint, where the initial model includes a model that performs information interaction in at least one dimension, the information bottleneck constraint may at least be used to suppress noise in the first multivariate time series, and the prediction model is a trained model used to predict a multivariate time series following a known multivariate time series. In this way, in a training process of the prediction model, sufficient information interaction is performed on the multivariate time series in the training sample, and various noise is suppressed based on the information bottleneck constraint, so that the constructed prediction model can more accurately predict the multivariate time series.

In a possible implementation, the information bottleneck constraint may be further used to enhance learning of useful information in the multivariate time series, so that a prediction model with more accurate prediction effect is further constructed, making it possible to more accurately predict the multivariate time series based on the prediction model.

In a possible implementation, an example in which the at least one dimension includes a first dimension is used to describe a process of obtaining the prediction model based on the first multivariate time series, the second multivariate time series, the initial model, and the information bottleneck constraint in the construction process of the prediction model. Obtaining the prediction model based on the first multivariate time series, the second multivariate time series, the initial model, and the information bottleneck constraint may include updating the initial model in the first dimension N times, where N is an integer greater than or equal to 1.

In an example, in the N times of updating the initial model in the first dimension, a process of updating the initial model in the first dimension is similar each time. A process of updating the initial model in the first dimension once may include: first, inputting the first multivariate time series into the initial model, and outputting a third multivariate time series; then, obtaining first mutual information based on a first intermediate result and the first multivariate time series, where the first intermediate result is high-dimensional mapping of the first multivariate time series in the first dimension, the first mutual information indicates impact of noise from a dimension other than the first dimension on a prediction process, and the first mutual information further indicates useful information learned from the dimension other than the first dimension; obtaining second mutual information based on the second multivariate time series and the first intermediate result, where the second mutual information indicates a relationship between representation and prediction; then determining a first loss based on the first mutual information and the second mutual information, and updating the initial model based on the first loss, to obtain an updated initial model; and updating the updated initial model based on the second multivariate time series and the third multivariate time series. Alternatively, the initial model may be updated first based on the second multivariate time series and the third multivariate time series, to obtain an updated initial model, and then the updated initial model is updated based on the first mutual information and the second mutual information. In this implementation, after the initial model is updated in the first dimension N times, an initial model updated for an N^{th} time in the first dimension may be used as the constructed prediction model. In this way, impact of noise from another feature on the training process can be suppressed, to obtain an accurate prediction model.

For example, the initial model may include a first encoding module and a first decoding module that perform information interaction in the first dimension, and an output of the first encoding module is used as an input of the first decoding module. In this case, inputting the first multivariate time series into the initial model, and outputting the third multivariate time series may include: inputting the first multivariate time series into the first encoding module in the initial model, where the output of the first encoding module is the first intermediate result; and inputting the first intermediate result into the first decoding module, where the first decoding module outputs the third multivariate time series.

In another possible implementation, an example in which the at least one dimension includes a first dimension and further includes a second dimension is used to describe a process of obtaining the prediction model based on the first multivariate time series, the second multivariate time series, the initial model, and the information bottleneck constraint in the construction process of the prediction model. Obtaining the prediction model based on the first multivariate time series, the second multivariate time series, the initial model, and the information bottleneck constraint may include updating the initial model in the first dimension N times and updating the initial model in the second dimension M times, where M is an integer greater than or equal to 1. For the N times of updating the initial model in the first dimension, refer to the foregoing implementation.

In an example, in the M times of updating the initial model in the second dimension, a process of updating the initial model in the second dimension is similar each time. A process of updating the initial model in the second dimension once may include: first, inputting the first multivariate time series into the initial model, and outputting a fourth multivariate time series; then, obtaining third mutual information based on the first multivariate time series and an output second intermediate result, where the second intermediate result is high-dimensional mapping of the first multivariate time series in the second dimension, the third mutual information indicates impact of noise from dimensions on a prediction process, and the dimensions include the second dimension; obtaining fourth mutual information based on the second multivariate time series and the second intermediate result, where the fourth mutual information indicates a relationship between representation and prediction; then determining a second loss based on the third mutual information and the fourth mutual information, and updating the initial model based on the second loss, to obtain an updated initial model; and updating the updated initial model based on the second multivariate time series and the fourth multivariate time series. Alternatively, the initial model may be updated first based on the second multivariate time series and the fourth multivariate time series, to obtain an updated initial model, and then the updated initial model is updated based on the third mutual information and the fourth mutual information. In this implementation, after the initial model is updated in the first dimension N times and the initial model is updated in the second dimension M times, an initial model from a last time of updating may be used as the constructed prediction model. In this way, impact of noise in the dimensions on the training process can be suppressed, so that noise can be suppressed more comprehensively, and a more accurate prediction model can be obtained.

For example, the initial model may further include a second encoding module and a second decoding module that perform information interaction in the second dimension, and an output of the second encoding module is used as an input of the second decoding module. In this case, inputting the first multivariate time series into the initial model, and outputting the fourth multivariate time series may include: inputting the first multivariate time series into the second encoding module in the initial model, where the output of the second encoding module is the second intermediate result; and inputting the second intermediate result into the second decoding module, where the second decoding module outputs the fourth multivariate time series.

In still another possible implementation, an example in which the at least one dimension includes a second dimension is used to describe a process of obtaining the prediction model based on the first multivariate time series, the second multivariate time series, the initial model, and the information bottleneck constraint in the construction process of the prediction model. Obtaining the prediction model based on the first multivariate time series, the second multivariate time series, the initial model, and the information bottleneck constraint may include updating the initial model in the second dimension L times, where L is an integer greater than or equal to 1. For the L times of updating the initial model in the second dimension, refer to the foregoing implementation. Details are not described herein again.

In an example, in the step of obtaining the prediction model based on the first multivariate time series, the second multivariate time series, the initial model, and the information bottleneck constraint in the construction process of the prediction model, updating the initial model in the second dimension and updating the initial model in the first dimension are performed according to a preset rule, and an initial model from a previous time of updating is used as an initial model in a subsequent update operation. The preset rule may include, for example, but is not limited to: Updating the initial model in the second dimension and updating the initial model in the first dimension may be alternately performed, and an alternating frequency may be 1 or any other positive integer. For example, the alternating frequency is equal to 1. After the initial model is updated in the second dimension each time, the initial model is updated in the first dimension each time. Alternatively, after the initial model is updated in the second dimension M times, the initial model is updated in the first dimension N times. Alternatively, the initial model is updated in the first dimension N times, the initial model is updated in the second dimension M times.

In an example, the first dimension may be a variable dimension, a feature dimension, or a channel dimension, and the second dimension is a time dimension or a frequency dimension.

In a possible implementation, after the prediction model is constructed, the method may further include: obtaining a sixth multivariate time series based on a fifth multivariate time series and the prediction model. The fifth multivariate time series is a to-be-predicted multivariate time series, and the sixth multivariate time series is a prediction result of the prediction model for a multivariate time series that may appear after the fifth multivariate time series. If prediction performance of the prediction model is good enough, the multivariate time series collected after the fifth multivariate time series is similar enough to the sixth multivariate time series.

In an example, the fifth multivariate time series and the first multivariate time series are respectively used as inputs of the prediction model in a prediction phase and a training phase. A scale of the fifth multivariate time series may be the same as a scale of the first multivariate time series. If prediction is directly performed based on the constructed prediction model, a scale of the sixth multivariate time series may be the same as a scale of the second multivariate time series. If there is a specific requirement on a scale of an output multivariate time series, the constructed prediction model may be adjusted. In this case, a scale of the sixth multivariate time series may be different from a scale of the second multivariate time series.

According to a second aspect, this application further provides a method for calling a prediction model. In the method, after a to-be-predicted first multivariate time series is generated, a prediction model constructed based on the method provided in embodiments of this application may be obtained, and the prediction model is used to predict the first multivariate time series, to obtain a second multivariate time series. In an example, the method may include, for example: first, obtaining the prediction model, where the prediction model is a trained model used to predict a multivariate time series, the prediction model is constrained by an information bottleneck constraint in a training process, and the information bottleneck constraint is used to suppress the multivariate time series in a training sample; and then obtaining the second multivariate time series based on the prediction model and the first multivariate time series, where the second multivariate time series is a prediction result of the prediction model for a multivariate time series that appears after the first multivariate time series. In this way, because the prediction model can perform sufficient information interaction on the first multivariate time series and can suppress various noise, a prediction result (that is, the second multivariate time series) obtained by using the prediction model for the first multivariate time series is accurate, and is close to a real multivariate time series that appears after the first multivariate time series. This provides a reliable basis for making a reasonable decision based on the prediction result.

In a possible implementation, the information bottleneck constraint may be further used to enhance learning of useful information in the multivariate time series, making it possible to more accurately predict the multivariate time series based on the prediction model.

It should be noted that, for related descriptions of the second aspect, refer to corresponding descriptions of the first aspect. For example, for a specific implementation and a construction process of the prediction model in the second aspect, refer to corresponding descriptions of the first aspect.

According to a third aspect, this application further provides an apparatus for constructing a prediction model. The apparatus may include an obtaining unit and a training unit. The obtaining unit is configured to obtain a plurality of first training samples, where each of the plurality of first training samples includes a first multivariate time series and a second multivariate time series, and the second multivariate time series is a multivariate time series collected after the first multivariate time series in a first training sample to which the second multivariate time series belongs. The training unit is configured to obtain a prediction model based on the first multivariate time series, the second multivariate time series, an initial model, and an information bottleneck constraint, where the initial model includes a model that performs information interaction in at least one dimension, the information bottleneck constraint is used to suppress noise in the first multivariate time series, and the prediction model is a trained model used to predict a multivariate time series following a known multivariate time series.

In a possible implementation, the information bottleneck constraint may be further used to enhance learning of useful information in the multivariate time series.

In a possible implementation, the at least one dimension includes a first dimension, and the training unit is specifically configured to update the initial model in the first dimension N times, where N is an integer greater than or equal to 1.

In an example, in the N times of updating the initial model by the training unit in the first dimension, a process of updating the initial model in the first dimension once includes: inputting the first multivariate time series into the initial model, and outputting a third multivariate time series, where the initial model includes a first encoding module and a first decoding module that perform information interaction in the first dimension, and an output of the first encoding module is used as an input of the first decoding module; obtaining first mutual information based on the first multivariate time series and a first intermediate result output by the first encoding module, where the first intermediate result is high-dimensional mapping of the first multivariate time series in the first dimension, the first mutual information indicates impact of noise from a dimension other than the first dimension on a prediction process, and the first mutual information further indicates useful information learned from the dimension other than the first dimension; obtaining second mutual information based on the second multivariate time series and the first intermediate result, where the second mutual information indicates a relationship between representation and prediction; updating the initial model based on the first mutual information and the second mutual information, to obtain an updated initial model; and updating the updated initial model based on the first multivariate time series and the third multivariate time series.

In another possible implementation, the at least one dimension further includes a second dimension, and the training unit is further configured to update the initial model in the second dimension M times, where M is an integer greater than or equal to 1.

In an example, in the M times of updating the initial model by the training unit in the second dimension, a process of updating the initial model in the second dimension once includes: inputting the first multivariate time series into the initial model, and outputting a fourth multivariate time series, where the initial model further includes a second encoding module and a second decoding module that perform information interaction in the second dimension, and an output of the second encoding module is used as an input of the second decoding module; obtaining third mutual information based on the first multivariate time series and a second intermediate result output by the second encoding module, where the second intermediate result is high-dimensional mapping of the first multivariate time series in the second dimension, the third mutual information indicates impact of noise from dimensions on a prediction process, and the dimensions include the second dimension; obtaining fourth mutual information based on the second multivariate time series and the second intermediate result, where the fourth mutual information indicates a relationship between representation and prediction; updating the initial model based on the third mutual information and the fourth mutual information, to obtain an updated initial model; and updating the updated initial model based on the first multivariate time series and the fourth multivariate time series.

In an example, updating the initial model in the second dimension and updating the initial model in the first dimension are alternately performed according to a preset rule, and an initial model from a previous time of updating is used as an initial model in a subsequent update operation.

In an example, the first dimension is a feature dimension or a channel dimension, and the second dimension is a time dimension or a frequency dimension.

In still another possible implementation, the at least one dimension includes a second dimension, and the training unit is specifically configured to update the initial model in the second dimension L times, where L is an integer greater than or equal to 1.

In a possible implementation, the apparatus may further include a prediction unit. The prediction unit is configured to obtain a sixth multivariate time series based on a fifth multivariate time series and the prediction model, where the sixth multivariate time series is a prediction result of the prediction model for a multivariate time series that appears after the fifth multivariate time series.

In an example, a scale of the fifth multivariate time series is the same as a scale of the first multivariate time series, and a scale of the sixth multivariate time series is the same as or different from a scale of the second multivariate time series.

It should be noted that, for related descriptions of the apparatus for constructing the prediction model in the third aspect, refer to corresponding descriptions in the first aspect.

According to a fourth aspect, this application further provides an apparatus for calling a prediction model. The apparatus may include an obtaining unit and a prediction unit. The obtaining unit is configured to obtain a prediction model, where the prediction model is a trained model used to predict a multivariate time series, the prediction model is constrained by an information bottleneck constraint in a training process, and the information bottleneck constraint is used to suppress noise of the multivariate time series in a training sample. The prediction unit is configured to obtain a second multivariate time series based on the prediction model and a first multivariate time series, where the second multivariate time series is a prediction result of the prediction model for a multivariate time series that appears after the first multivariate time series.

In a possible implementation, the information bottleneck constraint may be further used to enhance learning of useful information in the multivariate time series.

It should be noted that, for related descriptions of the apparatus for calling the prediction model in the fourth aspect, refer to corresponding descriptions in the second aspect.

According to a fifth aspect, this application provides a communication device. The communication device includes a processor and a memory. The processor is configured to execute instructions stored in the memory, to enable the communication device to implement the method corresponding to the first aspect, the second aspect, and the possible implementations of the first aspect and the second aspect.

According to a sixth aspect, this application further provides a storage medium. The storage medium stores instructions. When the instructions are run on a processor, the method corresponding to the first aspect, the second aspect, and the possible implementations of the first aspect and the second aspect is implemented.

According to a seventh aspect, this application further provides a program product. The program product includes a program, and when the program runs on a processor, the method corresponding to the first aspect, the second aspect, and the possible implementations of the first aspect and the second aspect is implemented.

According to an eighth aspect, this application provides a chip, including a memory and a processor. The memory is configured to store instructions, and the processor is configured to: invoke the instructions from the memory and run the instructions, to implement the method corresponding to the first aspect, the second aspect, and the possible implementations of the first aspect and the second aspect.

### BRIEF DESCRIPTION OF DRAWINGS

FIG. 1 is a schematic flowchart of a method 100 for constructing a prediction model according to an embodiment of this application;
FIG. 2 is a diagram of a framework of information interaction of an initial model according to an embodiment of this application;
FIG. 3 is a diagram of initial model training corresponding to channel attention according to an embodiment of this application;
FIG. 4 is a diagram of initial model training corresponding to temporal attention according to an embodiment of this application;
FIG. 5 is a schematic flowchart of a method 200 for calling a prediction model according to an embodiment of this application;
FIG. 6 is a diagram of a structure of a communication apparatus 600 according to an embodiment of this application;
FIG. 7 is a diagram of a structure of a communication apparatus 700 according to an embodiment of this application; and
FIG. 8 is a diagram of a structure of a communication device 800 according to an embodiment of this application.

### DESCRIPTION OF EMBODIMENTS

Prediction of a multivariate time series is widely used in many fields (such as finance, economy, meteorology, and transportation). After learning of future prediction results of a plurality of variables in a known multivariate time series, decision makers may learn of trends of the plurality of variables in the future, and use the trends as an important reference for making a corresponding decision. For example, in the financial field, investors need to predict future trends of a plurality of variables such as a stock price, an exchange rate, and an interest rate, to make investment decisions. For another example, in the meteorological field, meteorological forecasters need to predict future trends of a plurality of variables such as a temperature, humidity, and rainfall, to provide accurate weather forecasts. For another example, in the transportation field, transportation planners need to predict future trends of a plurality of variables such as traffic flow and a congestion status, to formulate reasonable transportation plans. For another example, in grid connection application of industrial entities and commercial entities, industrial entities need to predict load electricity consumption, to determine an amount of electricity traded from a power grid, thereby ensuring maximized benefits of the industrial entities while meeting production requirements of the industrial entities. It can be learned that accurate prediction of a multivariate time series is of great significance in actual application.

Currently, prediction of the multivariate time series is not accurate enough.

For example, a main principle of a frequency enhanced decomposed transformer (Frequency Enhanced Decomposed Transformer, FEDFormer) may be understood as: Based on an attention (Attention) mechanism, a point-wise (point-wise) relationship is captured, and operations such as enhancement and attention are converted to frequency domain by using conversion from time domain into frequency domain, so that prediction performance can be optimized to some extent, and computing complexity of the model is reduced. However, the FEDFormer has the following problems when predicting a multivariate time series: Problem 1: Noise in the multivariate time series is not suppressed, and a prediction result is not accurate enough. Problem 2: To reduce computing complexity, time domain data with a large vector length is converted into frequency domain data with a small vector length, and then an operation is performed in frequency domain. Sampling in frequency domain is random, and consequently, information content of the multivariate time series is reduced, and a prediction result is not accurate enough. Problem 3: The FEDFormer is complex, and needs to be trained by using a large amount of data to achieve specific prediction precision.

For another example, a main principle of Dlinear may be understood as: A multi-layer perceptron (Multilayer Perceptron, MLP) structure is used for modeling to capture a point-to-point (point2point) relationship. During specific implementation, the multivariate time series is data that is of n features and that is collected at T moments, where both n and T are integers greater than 1. Dlinear splits the multivariate time series in a feature dimension, and splits the multivariate time series into n "unit time series", where n is a quantity of "variates" in the multivariate time series, and each "unit time series" indicates only data of one feature at a plurality of moments. For each "unit time series", a model is separately established, and each model only needs to consider using an MLP structure to capture mapping from T input moments to K future output moments, where K is an integer greater than or equal to 1, and K may be equal to T, or K may not be equal to T. Dlinear predicts the multivariate time series by separately performing modeling for different features, which can avoid introducing noise of another feature into prediction of a "unit time series" corresponding to each feature. However, the following problems exist: Problem 1: In separate modeling in the feature dimension, information of another feature is not introduced. Consequently, prediction of each feature lacks contribution of another feature associated with the feature, and a prediction result is probably inaccurate. Problem 2: Although noise of the another feature is not introduced, the "unit time series" corresponding to each feature inevitably has noise of the feature. In this manner, noise of the feature in the "unit time series" corresponding to each feature is not suppressed.

In addition, regardless of the FEDFormer or Dlinear, modeling is performed only in a time dimension, and is not performed in a feature dimension.

In view of this, an embodiment of this application provides a method for constructing a prediction model for predicting a multivariate time series. In a modeling process of the prediction model, information interaction is performed in different dimensions, to enrich information content in the multivariate time series. In addition, in an information interaction process, noise generated between dimensions and noise inherent in the dimensions are suppressed, so that a prediction model with higher prediction precision is obtained.

In a possible implementation, an embodiment of this application provides a method for constructing a prediction model. In the method, a plurality of first training samples are first obtained, where each of the plurality of first training samples includes a first multivariate time series and a second multivariate time series, and the second multivariate time series is a multivariate time series collected after the first multivariate time series in a first training sample to which the second multivariate time series belongs. Then, a prediction model is obtained based on the first multivariate time series, the second multivariate time series, an initial model, and an information bottleneck constraint, where the initial model includes a model that performs information interaction in at least one dimension, the information bottleneck constraint is used to suppress noise in the first multivariate time series, and the prediction model is a trained model used to predict a multivariate time series following a known multivariate time series. In this way, in a training process of the prediction model, sufficient information interaction is performed on the multivariate time series in the training sample, and various noise is suppressed based on the information bottleneck constraint, so that the constructed prediction model can more accurately predict the multivariate time series.

It should be noted that, the method for constructing the prediction model may be implemented by an apparatus for constructing a prediction model provided in embodiments of this application, and the apparatus for constructing the prediction model may be carried in an electronic device or a functional module of an electronic device.

In another possible implementation, an embodiment of this application further provides a method for calling a prediction model. In the method, after a to-be-predicted first multivariate time series is generated, a prediction model constructed based on the method provided in embodiments of this application may be obtained, and the prediction model is used to predict the first multivariate time series, to obtain a second multivariate time series. Because the prediction model can perform sufficient information interaction on the first multivariate time series, and can suppress various noise, a prediction result (that is, the second multivariate time series) obtained by using the prediction model for the first multivariate time series is accurate, and is close to a real multivariate time series that appears after the first multivariate time series. This provides a reliable basis for making a reasonable decision based on the prediction result.

It should be noted that the method for calling the prediction model may be implemented by an apparatus for calling a prediction model provided in embodiments of this application, the apparatus for calling the prediction model may be carried in an electronic device or a functional module of an electronic device, and the entity that implements the method for calling the prediction model may be the same as or different from the entity that implements the method for constructing the prediction model.

Before the methods provided in embodiments of this application are described, concepts that may be used in embodiments of this application are first described.

An attention mechanism usually refers to a mechanism of extracting a part of all information to perform information perception. This mechanism originates from the research on human vision. In human cognition, due to a bottleneck of information processing, humans selectively focus on a part of all information and ignore other visible information. Therefore, the attention mechanism emerges. For a neural network, the attention mechanism may be understood as layer-by-layer aggregation and update of information. For prediction of a multivariate time series, the attention mechanism is to refresh information of a location by using information of another location.

Multi-view (Multi-View, MV) refers to learning from a plurality of perspectives, so that a model can better understand things from a plurality of aspects, thereby improving performance of the model. Understanding of multi-view may include the following two aspects: Aspect 1: Multi-view is a plurality of sources. For example, during human body recognition, a face, a fingerprint, or the like may be used as inputs of different sources. Aspect 2: Multi-view is a plurality of feature subsets. For example, in an image, different features such as a color and a text may be used for description. For prediction of a multivariate time series, multi-view may be understood as modeling from different perspectives of data. For example, a prediction model of the multivariate time series may perform information interaction in a time dimension and a feature (which may also be referred to as a variate, a variable, or a channel (channel)) dimension.

Mutual information is a metric of an amount of information in information theory, and may be understood as an amount of information that is included in a random variable and that is about another random variable, or may be understood as uncertainty that is of a random variable and that is reduced because another random variable is known.

An information bottleneck (Information Bottleneck, IB) is a method in information theory used to explain and analyze data complexity. According to the theory, information in data can be divided into two parts: useful information and useless information. The useful information refers to a part that can be used to predict or explain data, and the useless information refers to a part that cannot provide any prediction or explanation value. A core idea of the information bottleneck is to extract key information (the key information may also be understood as as much useful information as possible) from data by minimizing a difference between the useful information and the useless information. Because the difference is a bottleneck that limits data compression and prediction capabilities, the difference may be referred to as the "information bottleneck".

The following describes a method for constructing a prediction model provided in an embodiment of this application.

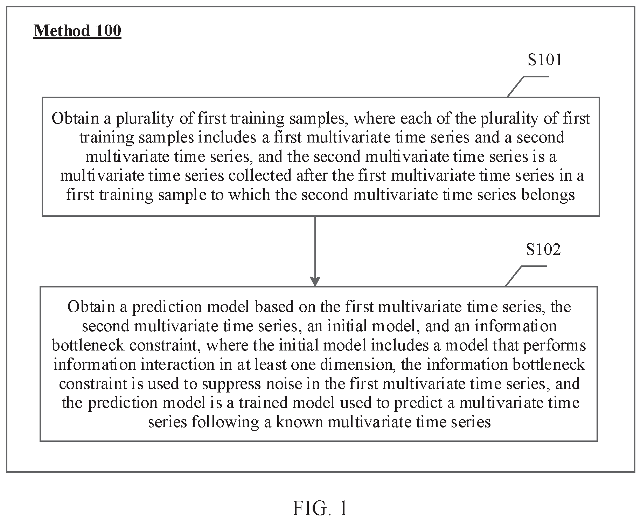

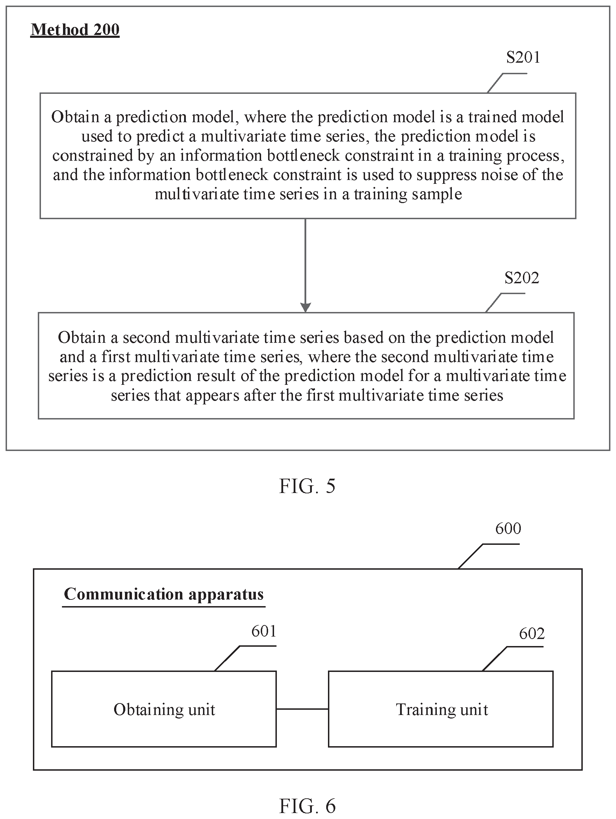

FIG. 1 is a schematic flowchart of a method 100 for constructing a prediction model according to an embodiment of this application. The method 100 may be applied to an apparatus for constructing a prediction model. The apparatus for constructing the prediction model may be, for example, an apparatus 600 for constructing a prediction model shown in FIG. 6.

As shown in FIG. 1, the method 100 may include, for example, the following S101 and S102.

S101: Obtain a plurality of first training samples, where each of the plurality of first training samples includes a first multivariate time series and a second multivariate time series, and the second multivariate time series is a multivariate time series collected after the first multivariate time series in a first training sample to which the second multivariate time series belongs.

In an example, S101 may include, for example: obtaining historical data of preset duration (for example, 30 days), where the historical data may be data collected and stored at a preset time granularity (for example, 15 minutes) within the preset duration; and dividing the historical data in a time dimension based on a preset step (for example, 192), to obtain the plurality of first training samples. Each first training sample may include the first multivariate time series and the second multivariate time series, the first multivariate time series may be first T (for example, 96) multivariate time series in the first training sample, and the second multivariate time series is a multivariate time series other than the first multivariate time series in the first training sample.

For example, in the historical data, the time granularity is 15 minutes (that is, data of each feature is collected every 15 minutes), and the preset duration is 30 days. The historical data includes feature data of 96*30=2880 time points in total. It is assumed that the constructed prediction model uses a multivariate time series of one day (that is, 96 time points) to predict a multivariate time series of a next day. In this case, an input of the prediction model and an output of the prediction model need feature data of 96*2=192 consecutive time points. Therefore, the feature data of the 2880 time points in the historical data is divided by using 192 as a preset step, to obtain 15 first training samples. Each first training sample includes feature data of 192 consecutive time points. In each first training sample, feature data of first 96 time points forms a first multivariate time series, and is used as an input for training the prediction model by using the first training sample. Feature data of last 96 time points forms a second multivariate time series, is used as a theoretical output corresponding to the input first multivariate time series when the first training sample is used to train the prediction model, and may be understood as a label of training data in a common training sample.

It can be learned that the first training sample obtained in S101 provides a data basis for performing a training step in S102.

S102: Obtain a prediction model based on the first multivariate time series, the second multivariate time series, an initial model, and an information bottleneck constraint, where the initial model includes a model that performs information interaction in at least one dimension, the information bottleneck constraint is used to suppress noise in the first multivariate time series, and the prediction model is a trained model used to predict a multivariate time series following a known multivariate time series.

In an example, S102 may include, for example, S11: Train the initial model based on an i^{th} first training sample to obtain an updated initial model, where i=1, 2,..., A, and A is a quantity of first training samples; S12: Determine whether a training stop condition is met, and if the training stop condition is met, perform S14, or if the training stop condition is not met, perform S13; S13: i=i+1 and return to perform S11; and S14: End a training process, and determine the updated initial model as the prediction model in S102. In this way, the initial model is trained for a plurality of times, and the initial model is continuously updated, so that prediction performance of the initial model is continuously improved. The initial model obtained when the training stop condition is met is denoted as the prediction model, to accurately predict a multivariate time series. The training stop condition may include, for example, but is not limited to: i is equal to A, or prediction precision of the initial model is greater than a preconfigured precision threshold.

In this embodiment of this application, to enable the constructed prediction model to perform information interaction on an input multivariate time series, to improve richness of data input into the prediction model, and better explore an association relationship between features, an architecture of the initial model is an architecture of a model that performs information interaction in at least one dimension, and the architecture of the initial model may include, for example, but is not limited to, a multi-view attention architecture or an MLP architecture. The following uses an example in which the architecture of the initial model is the multi-view attention architecture for description. The at least one dimension may include a time dimension, a frequency dimension, a variable dimension, a feature dimension, or a channel dimension. The following uses an example in which the at least one dimension is a first dimension, a second dimension, or a first dimension and a second dimension, the first dimension is a variable dimension, a feature dimension, or a channel dimension, and the second dimension is a time dimension or a frequency dimension for description.

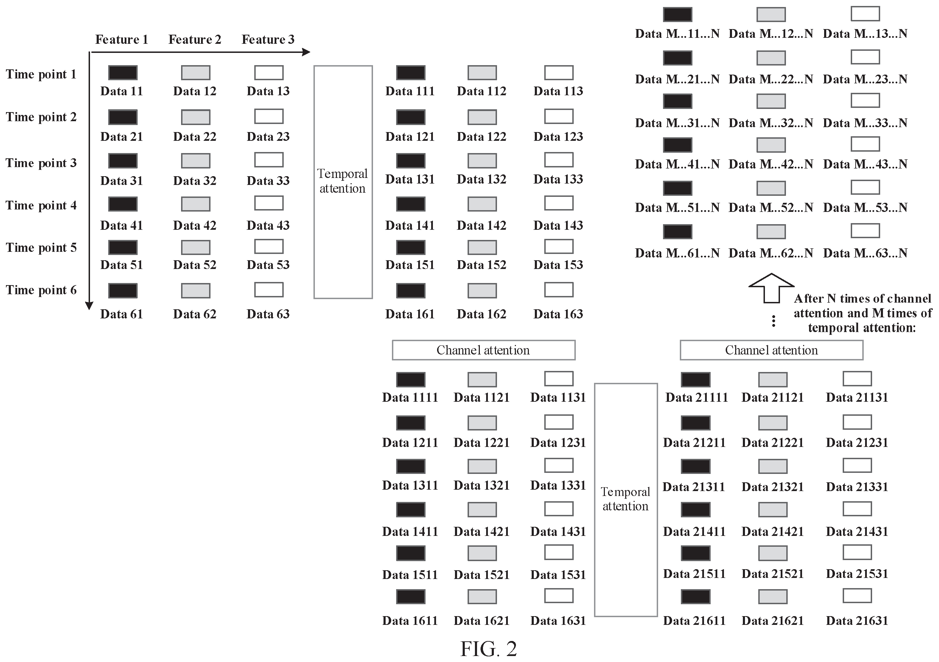

For information interaction of the initial model, refer to FIG. 2. In FIG. 2, a multivariate time series is a 6*3 series, and includes feature data of three features at 6 time points. 6 may be understood as a series length, and 3 may be understood as a quantity of features. When the first multivariate time series passes through the multi-view attention architecture, information interaction is performed from different perspectives. A feasible manner may include: performing information interaction (temporal attention in FIG. 2) in a time dimension, and/or performing information interaction (channel attention in FIG. 2) in a feature dimension. Temporal attention may be understood as performing information interaction by using data of a same feature at different time points. For example, in FIG. 2, for a column of features represented by black, information interaction may be performed between data at each time point and data at all or a part of other time points of the feature, to obtain updated feature data at the time point. A quantity of time points after information interaction is not limited. Channel attention may be understood as performing information interaction by using different feature data at a same (or different) time point. For example, in FIG. 2, for a piece of feature data in a first row, information interaction may be performed with all or a part of other feature data in the first row, and/or information interaction may be performed with all or a part of other feature data in each row, to obtain updated feature data of the feature. A quantity of features after information interaction is not limited.

A function of information exchange may be understood as: An association relationship between data in a multivariate time series is discovered, enabling an amount of information that can be extracted during information extraction to be sufficient, and facilitating more accurate mapping to downstream tasks (that is, future prediction is more accurate).

The multi-view attention architecture includes N times of channel attention and M times of temporal attention. Therefore, a sequence of performing channel attention and temporal attention may be flexibly designed based on a requirement. For example, channel attention and temporal attention may be alternately executed, and may be regularly or irregularly alternated. When channel attention and temporal attention are regularly alternated and executed, an alternating frequency may be 1 or an integer greater than 1. For another example, channel attention and temporal attention may be executed in sequence. Channel attention is first executed N times, and then temporal attention is executed M times; or temporal attention is first executed M times, and then channel attention is executed N times. For another example, channel attention and temporal attention may be executed at the same time, and do not interfere with each other in an execution process, and initial models obtained by performing channel attention N times and performing temporal attention M times respectively are fused. In FIG. 2, an example in which the multi-view attention architecture includes N times of channel attention and M times of temporal attention, and channel attention and temporal attention are alternately executed at an alternating frequency of 1 is used. Both M and N are integers greater than or equal to 1, and values of M and N may be the same or different.

In a process of implementing information fusion on interaction information of the first multivariate time series input to initial model in different dimensions, an information bottleneck constraint is further designed as a constraint on a training process of an initial model, to suppress noise. The information bottleneck constraint also corresponds to different constraints for different dimensions. Optionally, the information bottleneck constraint may be further used to enhance learning of useful information. The following uses the information bottleneck constraint that can suppress noise and enhance learning of the useful information as an example for description.

In a possible implementation, if the at least one dimension includes a first dimension, S102 may include updating the initial model in the first dimension N times. Correspondingly, in the scenario in FIG. 2, it may be understood that S102 includes performing channel attention N times. A process of updating the initial model in the first dimension is similar each time. The following describes how to perform S102 in this implementation by using a process of updating the initial model in the first dimension once as an example.

In an example, the process of updating the initial model in the first dimension once in S102 may include: S21: Input the first multivariate time series into the initial model, and output a third multivariate time series; S22: Obtain first mutual information based on the first multivariate time series and a first intermediate result, where the first intermediate result is high-dimensional mapping of the first multivariate time series in the first dimension, the first mutual information indicates impact of noise from a dimension other than the first dimension on a prediction process, and the first mutual information further indicates useful information learned from the dimension other than the first dimension; S23: Obtain second mutual information based on the second multivariate time series and the first intermediate result, where the second mutual information indicates a relationship between representation and prediction; and S24: Determine a first loss based on the first mutual information and the second mutual information, and update the initial model based on the first loss. Optionally, the process may further include: S25: Update the initial model based on the second multivariate time series and the third multivariate time series. The "initial model" updated in S25 may be the "initial model" obtained based on the update in S24.

It may be understood that the initial model may include a first encoding module and a first decoding module that perform information interaction in the first dimension, and an output of the first encoding module is used as an input of the first decoding module. For example, the first intermediate result is the input of the first encoding module, and is also the output of the first decoding module. Both the first encoding module and the first decoding module can implement information interaction corresponding to the first dimension. For example, a process in which the first encoding module performs high-dimensional mapping on the input first multivariate time series to obtain the first intermediate result involves information interaction in the first dimension.

It should be noted that, in S25, updating the initial model based on the second multivariate time series and the third multivariate time series may be, for example, updating the initial model based on a difference between the second multivariate time series and the third multivariate time series.

It should be noted that S22 and S23 are not subject to a specific sequence in this embodiment of this application, and of S24 and S25 are not subject to a specific sequence in this embodiment of this application.

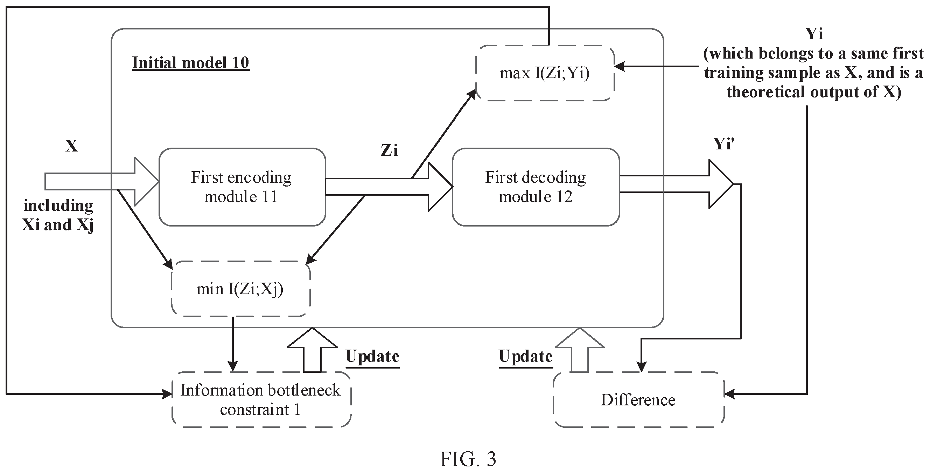

For example, the first dimension is a variable dimension, a feature dimension, or a channel dimension. As shown in FIG. 3, an initial model 10 may include a first encoding module 11 and a first decoding module (which may also be referred to as a first prediction module) 12 that perform information interaction in the first dimension. The first training sample includes a first multivariate time series X and a second multivariate time series Y. The first multivariate time series X is input into the first encoding module 11, the first encoding module 11 outputs a first intermediate result Zi, the first intermediate result Zi is input into the first decoding module 12, and the first decoding module 12 outputs a third multivariate time series Yi'. In FIG. 3, Xi represents an i^{th} feature in the first multivariate time series X, Xj represents a feature other than the i^{th} feature in the first multivariate time series X, and Zi is representation (which may also be referred to as high-dimensional mapping) of Xi. In channel attention, a function of an information bottleneck constraint 1 corresponding to the first dimension may be understood as follows: suppressing impact of noise from another feature on a training process, and increasing useful information learned from the another feature. For example, noise may be suppressed and more useful information may be learned by using mutual information (that is, the first mutual information) between Zi and Xj. Mutual information (that is, the second mutual information) between Zi and Yi indicates a relationship between representation and prediction. The information bottleneck constraint 1 may be expressed by using the following formula (1): ${L}_{IB} = I \left(Zi; Yi\right) - β ∗ I \left(Zi; Xj\right)$

*I*(*Zi*; *Yi*) may correspond to the second mutual information in S23. *I*(*Zi*; *Xj*) may correspond to the first mutual information in S22. *β* is a hyperparameter, and may be flexibly set based on an actual requirement. L_{IB} is a basis for updating the initial model in S24 in current channel attention, and may be understood as the first loss determined based on the first mutual information and the second mutual information.

In this example, after channel attention is performed N times, the initial model updated by using S24 or S25 in N^{th} channel attention may be used as the prediction model in S102.

In another example, if the at least one dimension includes a first dimension and further includes a second dimension, S102 may include: updating the initial model in the first dimension N times and updating the initial model in the second dimension M times. Correspondingly, in the scenario in FIG. 2, it may be understood that S102 includes performing channel attention N times and performing temporal attention M times. For a process of updating the initial model in the first dimension each time, refer to S21 to S25. A process of updating the initial model in the second dimension is similar each time. The following describes how to perform S102 in this implementation by using a process of updating the initial model in the second dimension once as an example.

The process of updating the initial model in the second dimension once in S102 may include: S31: Input the first multivariate time series into the initial model, and output a fourth multivariate time series; S32: Obtain third mutual information based on the first multivariate time series and a second intermediate result, where the second intermediate result is high-dimensional mapping of the first multivariate time series in the second dimension, the third mutual information indicates impact of noise from dimensions on a prediction process, and the dimensions include the second dimension; S33: Obtain fourth mutual information based on the second multivariate time series and the second intermediate result, where the fourth mutual information indicates a relationship between representation and prediction; and S34: Determine a second loss based on the third mutual information and the fourth mutual information, and update the initial model based on the second loss. Optionally, the process may further include: S35: Update the initial model based on the second multivariate time series and the fourth multivariate time series.

It may be understood that the initial model may further include a second encoding module and a second decoding module that perform information interaction in the second dimension, and an output of the second encoding module is used as an input of the second decoding module. For example, the second intermediate result is the output of the second encoding module, and is also the input of the second decoding module. Both the second encoding module and the second decoding module can implement information interaction corresponding to the second dimension. For example, a process in which the second encoding module performs high-dimensional mapping on the input first multivariate time series to obtain the second intermediate result involves information interaction in the second dimension.

It should be noted that, in S35, updating the initial model based on the second multivariate time series and the fourth multivariate time series may be, for example, updating the initial model based on a difference between the second multivariate time series and the fourth multivariate time series.

It should be noted that S32 and S33 are not subject to a specific sequence in this embodiment of this application, and of S34 and S35 are not subject to a specific sequence in this embodiment of this application.

It should be noted that a difference between S33 and S23 lies in that, in S23, impact of noise from the another feature on the training process is suppressed based on the first loss, but in S33, impact of noise from the features on the training process can be suppressed based on the second loss, where the features include a feature and another feature, and noise can be more comprehensively suppressed, so that the prediction model performs more comprehensive noise suppression on a to-be-inferred multivariate time series, making it possible for the prediction model to predict more accurately.

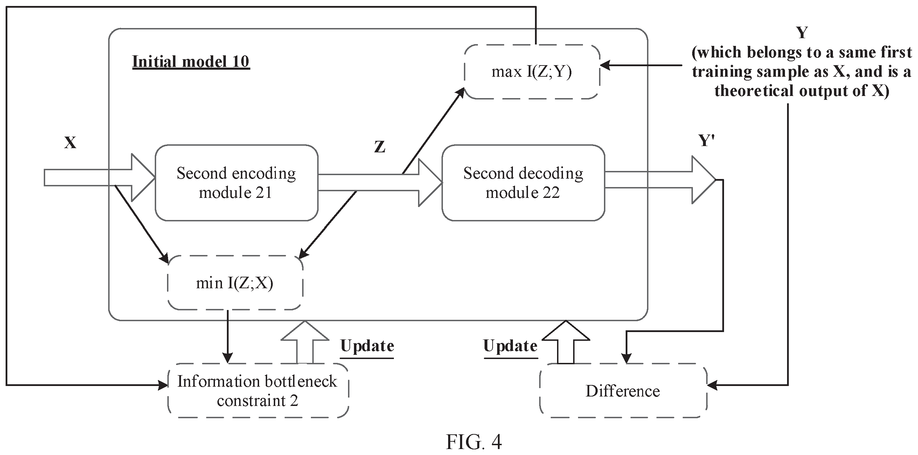

For example, the first dimension is a variable dimension, a feature dimension, or a channel dimension, and the second dimension is a time dimension or a frequency dimension. As shown in FIG. 4, the initial model 10 may further include a second encoding module 21 and a second decoding module (which may also be referred to as a second prediction module) 22 that perform information interaction in the second dimension. The first training sample includes a first multivariate time series X and a second multivariate time series Y. The first multivariate time series X is input into the second encoding module 21, the second encoding module 21 outputs a second intermediate result Z, the second intermediate result Z is input into the second decoding module 22, and the second decoding module 22 outputs a fourth multivariate time series Y'. In FIG. 4, Z is representation of X. In temporal attention, a function of an information bottleneck constraint 2 corresponding to the second dimension may be understood as follows: suppressing impact of noise from another feature on a training process, and suppressing impact of noise from a feature itself on the training process. For example, noise of the another feature and noise of the feature itself may be suppressed by reducing mutual information (that is, the third mutual information) between Z and X. Mutual information (that is, the fourth mutual information) between Z and Y indicates a relationship between representation and prediction. The information bottleneck constraint 2 may be expressed by using the following formula (2): ${L}_{IB} = I \left(Z; Y\right) - β ∗ I \left(Z; X\right)$

*I*(*Z*; *Y*) may correspond to the fourth mutual information in S33. *I*(*Z*; *Y*) may correspond to the third mutual information in S32. *β* is a hyperparameter, and may be flexibly set based on an actual requirement. L_{IB} is a basis for updating the initial model in S34 in current temporal attention, and may be understood as the second loss determined based on the third mutual information and the fourth mutual information.

In this example, after channel attention is performed N times and temporal attention is performed M times, an updated initial model obtained through a last time of attention may be used as the prediction model in S102. In this example, updating the initial model in the second dimension and updating the initial model in the first dimension may be performed according to a preset rule. Regardless of updating the initial model in the second dimension or updating the initial model in the first dimension, an initial model from a previous time of updating may be used as an initial model in a subsequent update operation.

In another possible implementation, if the at least one dimension includes a second dimension, S102 may include: updating the initial model in the second dimension L times. Correspondingly, in the scenario in FIG. 2, it may be understood that S102 includes performing temporal attention for L times. A process of updating the initial model in the second dimension is similar each time. For example, for a process of updating the initial model in the first dimension once, refer to related descriptions in S31 to S35. L may be an integer greater than or equal to 1, and L and N may be the same or different.

In this implementation, after temporal attention is performed L times, an updated initial model in an L^{th} time of temporal attention may be used as the prediction model in S102.

In some implementations, after performing S101 and S102, an apparatus for constructing the prediction model may integrate the obtained prediction model into a device or a server that can be loaded by a user, so that when there is a prediction task of a multivariate time series, an apparatus for calling the prediction model loads the prediction model from the device or the server, and predicts the multivariate time series by using the prediction model.

In an example, after S102, the method 100 may further include S103: Obtain a sixth multivariate time series based on a fifth multivariate time series and the prediction model, where the sixth multivariate time series is a prediction result of the prediction model for a multivariate time series that appears after the fifth multivariate time series. A scale of the fifth multivariate time series may be the same as a scale of the first multivariate time series, and a scale of the sixth multivariate time series may be the same as or different from a scale of the second multivariate time series.

Generally, when prediction is directly performed based on the prediction model constructed in S102, the scale of the sixth multivariate time series is the same as the scale of the second multivariate time series.

A prediction task of a multivariate time series in a scenario of "load prediction" is used as an example. When a high-precision prediction model is constructed in the method 100, historical data may come from at least one data set, includes load data of the at least one data set at a site for one year at a time granularity of 15 minutes, and further includes a plurality of numerical meteorological features of the site for one year that may affect a load. For a training process, refer to S101 and S102 in the method 100, to obtain a load prediction model. When the load prediction model is used, load statuses X_{T+1:T+K} ∈ R_{K×D} at future K time points may be predicted based on load data X_{1:T}∈R_{T×D} at T historical time points (a time point appears every 15 minutes), where D is a quantity of features involved in a multivariate time series. If T in a first multivariate time series is 96 and K in a second multivariate time series is 96 during training, when the load prediction model is used, a multivariate time series of T=96 historical time points (96* 15 minutes=one day) may be used to predict a load status of a next day. For example, a multivariate time series collected at an interval of 15 minutes between 3:00 p.m. today and 3:00 p.m. yesterday is used as an input of the load prediction model, and a prediction result output by the load prediction model may indicate a load status from 3:00 p.m. today to 3:00 p.m. tomorrow.

When a prediction result of a specific scale needs to be obtained and the specific scale is different from a scale of the second multivariate time series, a structure of the prediction model may be adjusted, so that the prediction result is a multivariate time series of the specific scale. The prediction model may include multi-view attention and an MLP. The MLP is configured to simply adjust data output by multi-view attention. Therefore, the prediction result may be adjusted to a specific scale by adjusting an MLP structure.

Prediction effect of the prediction model (which may also be referred to as MTS-VIB) constructed in embodiments of this application is compared with prediction effect of another model that can predict a multivariate time series. It is verified that, in a plurality of times of cross validation performed on a same data set, prediction performance of the prediction model constructed in embodiments of this application is better than prediction performance of the another model.

The prediction model constructed in embodiments of this application can be applied to various fields in which a multivariate time series needs to be predicted, for example, fields related to prediction tasks of the multivariate time series, such as flu epidemic cases, traffic, meteorology, electricity, and an oil temperature of a transformer box. It is verified that, based on open-source datasets ILI, Traffic, Weather, Electricity, ETTm2, ETTm1, and ETTh2, the prediction performance of the prediction model constructed in embodiments of this application has optimal prediction performance in different models for predicting multivariate time series.

It can be learned that in the method 100, the prediction model is obtained through training by using multi-view information interaction and the information bottleneck constraint. The prediction model can extract richer useful information and suppress various noise, and therefore can perform high-precision prediction of the multivariate time series. In addition, the prediction model is not limited to selection of an initial model, and has strong generalization.

The following describes a method for calling a prediction model provided in an embodiment of this application.

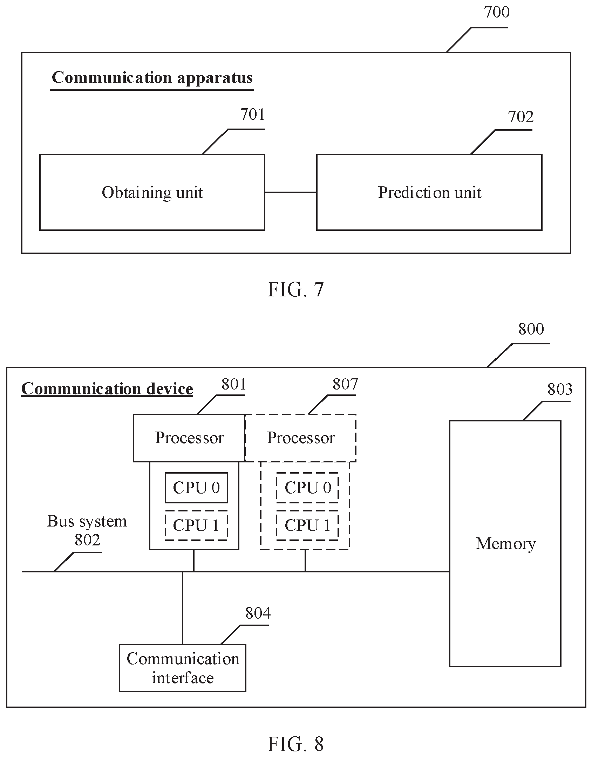

FIG. 5 is a schematic flowchart of a method 200 for calling a prediction model according to an embodiment of this application. The method 200 may be applied to an apparatus for calling a prediction model. The apparatus for calling the prediction model may be, for example, an apparatus 700 for calling a prediction model shown in FIG. 7.

As shown in FIG. 5, the method 200 may include, for example, the following S201 and S202.

S201: Obtain a prediction model, where the prediction model is a trained model used to predict a multivariate time series, the prediction model is constrained by an information bottleneck constraint in a training process, and the information bottleneck constraint is used to suppress noise of the multivariate time series in a training sample.

S202: Obtain a second multivariate time series based on the prediction model and a first multivariate time series, where the second multivariate time series is a prediction result of the prediction model for a multivariate time series that appears after the first multivariate time series.

Optionally, the information bottleneck constraint may be further used to enhance learning of useful information in the first multivariate time series.

It should be noted that, for the prediction model, refer to related descriptions of the prediction model in the method 100. For S201 and S202, refer to related descriptions of S103. The first multivariate time series may correspond to the fifth multivariate time series in S103, and the second multivariate time series corresponds to the sixth multivariate time series in S103.

It can be learned that, in the method 200, because the prediction model can perform sufficient information interaction on the first multivariate time series, and can enhance learning of the useful information in the first multivariate time series and suppress various noise, a prediction result (that is, the second multivariate time series) obtained by using the prediction model for the first multivariate time series is accurate, and is close to a real multivariate time series that appears after the first multivariate time series. This provides a reliable basis for a user to make a reasonable decision based on the prediction result.

Correspondingly, an embodiment of this application further provides a communication apparatus 600 (which may also be referred to as an apparatus 600 for constructing a prediction model), as shown in FIG. 6. The communication apparatus 600 may include an obtaining unit 601 and a training unit 602. Specifically,
the obtaining unit 601 is configured to obtain a plurality of first training samples, where each of the plurality of first training samples includes a first multivariate time series and a second multivariate time series, and the second multivariate time series is a multivariate time series collected after the first multivariate time series in a first training sample to which the second multivariate time series belongs. The obtaining unit 601 may perform S101 shown in FIG. 1.

The training unit 602 is configured to obtain a prediction model based on the first multivariate time series, the second multivariate time series, an initial model, and an information bottleneck constraint, where the initial model includes a model that performs information interaction in at least one dimension, the information bottleneck constraint is used to suppress noise in the first multivariate time series, and the prediction model is a trained model used to predict a multivariate time series following a known multivariate time series. The training unit 602 may perform S102 shown in FIG. 1.

In a possible implementation, the information bottleneck constraint is further used to enhance learning of useful information in the first multivariate time series.

In a possible implementation, the at least one dimension includes a first dimension, and the training unit 602 is specifically configured to update the initial model in the first dimension N times, where N is an integer greater than or equal to 1.

In an example, in the N times of updating the initial model by the training unit 602 in the first dimension, a process of updating the initial model in the first dimension once includes: inputting the first multivariate time series into the initial model, and outputting a third multivariate time series, where the initial model includes a first encoding module and a first decoding module that perform information interaction in the first dimension, and an output of the first encoding module is used as an input of the first decoding module; obtaining first mutual information based on the first multivariate time series and a first intermediate result output by the first encoding module, where the first intermediate result is high-dimensional mapping of the first multivariate time series in the first dimension, the first mutual information indicates impact of noise from a dimension other than the first dimension on a prediction process, and the first mutual information further indicates useful information learned from the dimension other than the first dimension; obtaining second mutual information based on the second multivariate time series and the first intermediate result, where the second mutual information indicates a relationship between representation and prediction; updating the initial model based on the first mutual information and the second mutual information, to obtain an updated initial model; and updating the updated initial model based on the first multivariate time series and the third multivariate time series.

In another possible implementation, the at least one dimension further includes a second dimension, and the training unit 602 is further configured to update the initial model in the second dimension M times, where M is an integer greater than or equal to 1.

In an example, in the M times of updating the initial model by the training unit 602 in the second dimension, a process of updating the initial model in the second dimension once includes: inputting the first multivariate time series into the initial model, and outputting a fourth multivariate time series, where the initial model further includes a second encoding module and a second decoding module that perform information interaction in the second dimension, and an output of the second encoding module is used as an input of the second decoding module; obtaining third mutual information based on the first multivariate time series and a second intermediate result output by the second encoding module, where the second intermediate result is high-dimensional mapping of the first multivariate time series in the second dimension, the third mutual information indicates impact of noise from dimensions on a prediction process, and the dimensions include the second dimension; obtaining fourth mutual information based on the second multivariate time series and the second intermediate result, where the fourth mutual information indicates a relationship between representation and prediction; updating the initial model based on the third mutual information and the fourth mutual information, to obtain an updated initial model; and updating the updated initial model based on the first multivariate time series and the fourth multivariate time series.

In an example, updating the initial model in the second dimension and updating the initial model in the first dimension are alternately performed according to a preset rule, and an initial model from a previous time of updating is used as an initial model in a subsequent update operation.

In an example, the first dimension is a feature dimension or a channel dimension, and the second dimension is a time dimension or a frequency dimension.

In still another possible implementation, the at least one dimension includes a second dimension, and the training module is specifically configured to update the initial model in the second dimension L times, where L is an integer greater than or equal to 1.

In a possible implementation, the apparatus 600 may further include a prediction unit. The prediction unit is configured to obtain a sixth multivariate time series based on a fifth multivariate time series and the prediction model, where the sixth multivariate time series is a prediction result of the prediction model for a multivariate time series that appears after the fifth multivariate time series.

In an example, a scale of the fifth multivariate time series is the same as a scale of the first multivariate time series, and a scale of the sixth multivariate time series is the same as or different from a scale of the second multivariate time series.

It should be noted that, for various specific implementations of the communication apparatus 600, refer to related descriptions of the method 100 corresponding to FIG. 1. Details are not described again in this embodiment.

Correspondingly, an embodiment of this application further provides a communication apparatus 700 (which may also be referred to as an apparatus 700 for calling a prediction model), as shown in FIG. 7. The communication apparatus 700 may include an obtaining unit 701 and a prediction unit 702. Specifically,
the obtaining unit 701 is configured to obtain a prediction model, where the prediction model is a trained model used to predict a multivariate time series, the prediction model is constrained by an information bottleneck constraint in a training process, and the information bottleneck constraint is used to suppress noise of the multivariate time series in a training sample. The obtaining unit 701 may perform S201 shown in FIG. 5.

The prediction unit 702 is configured to obtain a second multivariate time series based on the prediction model and a first multivariate time series, where the second multivariate time series is a prediction result of the prediction model for a multivariate time series that appears after the first multivariate time series. The prediction unit 702 may perform S202 shown in FIG. 5.

Optionally, the information bottleneck constraint may be further used to enhance learning of useful information in the first multivariate time series.

It should be noted that, for various specific implementations of the communication apparatus 700, refer to related descriptions of the method 200 corresponding to FIG. 5. Details are not described again in this embodiment.

Refer to FIG. 8. An embodiment of this application provides a communication device 800. The communication device 800 may be an execution entity in any one of the foregoing embodiments. The communication device 800 may implement the functions in the foregoing embodiments. The communication device 800 includes at least one processor 801, a bus system 802, a memory 803, and at least one communication interface 804.

The communication device 800 is an apparatus of a hardware structure, and may be configured to implement the functional modules in the communication apparatus 600 shown in FIG. 6. For example, a person skilled in the art may figure out that the obtaining unit 601 and the training unit 602 in the communication apparatus 600 shown in FIG. 6 are implemented by the at least one processor 801 by invoking code in the memory 803. For another example, a person skilled in the art may figure out that the obtaining unit 701 and the prediction unit 702 in the communication apparatus 700 shown in FIG. 7 may be implemented by the at least one processor 801 by invoking code in the memory 803.

Optionally, the communication device 800 may be a network device or a control entity that implements embodiments of this application.

Optionally, the processor 801 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions in this application.

The bus system 802 may include a path for transmitting information between the foregoing components.

The communication interface 804 is configured to communicate with another device or communication network.

The memory 803 may be a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, this is not limited herein. The memory may exist independently, and is connected to the processor through the bus. Alternatively, the memory may be integrated with the processor.

The memory 803 is configured to store application code for executing the solutions of this application, and the application code is executed under control of the processor 801. The processor 801 is configured to execute the application code stored in the memory 803, to implement functions in the methods in this application.

In a specific implementation, in an embodiment, the processor 801 may include one or more CPUs, for example, a CPU 0 and a CPU 1 shown in FIG. 8.

In a specific implementation, in an embodiment, the communication device 800 may include a plurality of processors, for example, the processor 801 and a processor 807 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

It should be understood that the communication apparatuses and the communication device in the foregoing product forms each have any function implemented by the execution entity in the foregoing method embodiments. Details are not described herein again.

An embodiment of this application further provides a chip, including a processor and an interface circuit. The interface circuit is configured to: receive instructions, and transmit the instructions to the processor. The processor may be, for example, a specific implementation form of a packet processing apparatus in embodiments of this application, and may be configured to perform the method 100 or the method 200. The processor is coupled to a memory. The memory is configured to store a program or the instructions, and when the program or the instructions are executed by the processor, the chip system is enabled to implement the method in any one of the foregoing method embodiments.

Optionally, there may be one or more processors in the chip system. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a microcontroller unit (microcontroller unit, MCU), a programmable controller (programmable logic device, PLD), or another integrated chip.

In addition, an embodiment of this application further provides a storage medium. The storage medium stores program code or instructions. When the program code or the instructions are run on a processor, the processor is enabled to perform the method in any one of the implementations in the foregoing embodiments.

In addition, an embodiment of this application further provides a program product. When the program product is run on a processor, the processor is enabled to perform the method in any one of the implementations of the method 100 or the method 200.

It should be understood that "determining B based on A" mentioned in embodiments of this application does not mean that B is determined only based on A, and B may alternatively be determined based on A and/or other information.

It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that the technical solutions provided in embodiments of this application are also applicable to similar technical problems with evolution of the network architecture and emergence of new service scenarios.

Ordinal numbers such as "1", "2", "3", "first", "second", and "third" in this application are used to distinguish between a plurality of objects, but are not intended to limit a sequence of the plurality of objects.

It should be understood that "A and/or B" mentioned in this application includes the following cases: Only A is included, only B is included, or both A and B are included.

From the foregoing descriptions of the implementations, a person skilled in the art may clearly understand that a part or all of the steps of the methods in embodiments may be implemented by software and a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or an optical disc, and includes several instructions for instructing a computer device (which may be a personal computer, a server, or a network communication device like a router) to perform the methods described in embodiments or some parts of embodiments of this application.

Embodiments in this specification are all described in a progressive manner. For same or similar parts in embodiments, refer to these embodiments. Each embodiment focuses on a difference from other embodiments. Especially, system embodiments and device embodiments are basically similar to method embodiments, and therefore are described briefly. For related parts, refer to partial description in the method embodiments. The described device and system embodiments are merely examples. The modules described as separate parts may or may not be physically separate, and parts displayed as modules may or may not be physical modules, may be located in one position, or may be distributed on a plurality of network units. Some or all of the modules may be selected based on actual needs to achieve the objectives of the solutions of embodiments. A person of ordinary skill in the art may understand and implement the solutions of embodiments without creative efforts.

The foregoing merely describes example implementations of this application, and is not intended to limit the protection scope of this application. It should be noted that a person of ordinary skill in the art may make improvements and polishing without departing from this application and the improvements and polishing shall fall within the protection scope of this application.

## Claims

1. A method for constructing a prediction model, comprising:
obtaining a plurality of first training samples, wherein each of the plurality of first training samples comprises a first multivariate time series and a second multivariate time series, and the second multivariate time series is a multivariate time series collected after the first multivariate time series in a first training sample to which the second multivariate time series belongs; and
obtaining a prediction model based on the first multivariate time series, the second multivariate time series, an initial model, and an information bottleneck constraint, wherein the initial model comprises a model that performs information interaction in at least one dimension, the information bottleneck constraint is used to suppress noise in the first multivariate time series, and the prediction model is a trained model used to predict a multivariate time series following a known multivariate time series.

2. The method according to claim 1, wherein the information bottleneck constraint is further used to enhance learning of useful information in the first multivariate time series.

3. The method according to claim 1 or 2, wherein the at least one dimension comprises a first dimension, and obtaining the prediction model based on the first multivariate time series, the second multivariate time series, the initial model, and the information bottleneck constraint comprises:
updating the initial model in the first dimension N times, wherein N is an integer greater than or equal to 1.

4. The method according to claim 3, wherein in the N times of updating the initial model in the first dimension, a process of updating the initial model in the first dimension once comprises:
inputting the first multivariate time series into the initial model, and outputting a third multivariate time series, wherein the initial model comprises a first encoding module and a first decoding module that perform information interaction in the first dimension, and an output of the first encoding module is used as an input of the first decoding module;
obtaining first mutual information based on the first multivariate time series and a first intermediate result, wherein the first intermediate result is high-dimensional mapping of the first multivariate time series in the first dimension, the first mutual information indicates impact of noise from a dimension other than the first dimension on a prediction process, and the first mutual information further indicates useful information learned from the dimension other than the first dimension;
obtaining second mutual information based on the second multivariate time series and the first intermediate result, wherein the second mutual information indicates a relationship between representation and prediction;
updating the initial model based on the first mutual information and the second mutual information, to obtain an updated initial model; and
updating the updated initial model based on the second multivariate time series and the third multivariate time series.

5. The method according to claim 3 or 4, wherein the at least one dimension further comprises a second dimension, and obtaining the prediction model based on the first multivariate time series, the second multivariate time series, the initial model, and the information bottleneck constraint further comprises:
updating the initial model in the second dimension M times, wherein M is an integer greater than or equal to 1.

6. The method according to claim 5, wherein in the M times of updating the initial model in the second dimension, a process of updating the initial model in the second dimension once comprises:
inputting the first multivariate time series into the initial model, and outputting a fourth multivariate time series;
obtaining third mutual information based on the first multivariate time series and a second intermediate result, wherein the second intermediate result is high-dimensional mapping of the first multivariate time series in the second dimension, the third mutual information indicates impact of noise from dimensions on the prediction process, and the dimensions comprise the second dimension;
obtaining fourth mutual information based on the second multivariate time series and the second intermediate result, wherein the fourth mutual information indicates a relationship between representation and prediction;
updating the initial model based on the third mutual information and the fourth mutual information, to obtain an updated initial model; and
updating the updated initial model based on the second multivariate time series and the fourth multivariate time series.

7. The method according to claim 5 or 6, wherein updating the initial model in the second dimension and updating the initial model in the first dimension are performed according to a preset rule, and an initial model from a previous time of updating is used as an initial model in a subsequent update operation.

8. The method according to any one of claims 5 to 7, wherein the first dimension is a variable dimension, a feature dimension, or a channel dimension, and the second dimension is a time dimension or a frequency dimension.

9. The method according to claim 1 or 2, wherein the at least one dimension comprises a second dimension, and obtaining the prediction model based on the first multivariate time series, the second multivariate time series, the initial model, and the information bottleneck constraint comprises:
updating the initial model in the second dimension L times, wherein L is an integer greater than or equal to 1.

10. The method according to any one of claims 1 to 9, wherein the method further comprises:
obtaining a sixth multivariate time series based on a fifth multivariate time series and the prediction model, wherein the sixth multivariate time series is a prediction result of the prediction model for a multivariate time series that appears after the fifth multivariate time series.

11. The method according to claim 10, wherein a scale of the fifth multivariate time series is the same as a scale of the first multivariate time series, and a scale of the sixth multivariate time series is the same as or different from a scale of the second multivariate time series.

12. A method for calling a prediction model, comprising:
obtaining a prediction model, wherein the prediction model is a trained model used to predict a multivariate time series, the prediction model is constrained by an information bottleneck constraint in a training process, and the information bottleneck constraint is used to suppress noise of the multivariate time series in a training sample; and
obtaining a second multivariate time series based on the prediction model and a first multivariate time series, wherein the second multivariate time series is a prediction result of the prediction model for a multivariate time series that appears after the first multivariate time series.

13. An apparatus for constructing a prediction model, comprising:
an obtaining unit, configured to obtain a plurality of first training samples, wherein each of the plurality of first training samples comprises a first multivariate time series and a second multivariate time series, and the second multivariate time series is a multivariate time series collected after the first multivariate time series in a first training sample to which the second multivariate time series belongs; and
a training unit, configured to obtain a prediction model based on the first multivariate time series, the second multivariate time series, an initial model, and an information bottleneck constraint, wherein the initial model comprises a model that performs information interaction in at least one dimension, the information bottleneck constraint is used to suppress noise in the first multivariate time series, and the prediction model is a trained model used to predict a multivariate time series following a known multivariate time series.

14. The apparatus according to claim 13, wherein the information bottleneck constraint is further used to enhance learning of useful information in the first multivariate time series.

15. The apparatus according to claim 13 or 14, wherein the at least one dimension comprises a first dimension, and the training unit is specifically configured to update the initial model in the first dimension N times, wherein N is an integer greater than or equal to 1.

16. The apparatus according to claim 15, wherein in the N times of updating the initial model by the training unit in the first dimension, a process of updating the initial model in the first dimension once comprises:
inputting the first multivariate time series into the initial model, and outputting a third multivariate time series;
obtaining first mutual information based on the first multivariate time series and a first intermediate result, wherein the first intermediate result is high-dimensional mapping of the first multivariate time series in the first dimension, the first mutual information indicates impact of noise from a dimension other than the first dimension on a prediction process, and the first mutual information further indicates useful information learned from the dimension other than the first dimension;
obtaining second mutual information based on the second multivariate time series and the first intermediate result, wherein the second mutual information indicates a relationship between representation and prediction;
updating the initial model based on the first mutual information and the second mutual information, to obtain an updated initial model; and
updating the updated initial model based on the first multivariate time series and the third multivariate time series.

17. The apparatus according to claim 15 or 16, wherein the at least one dimension further comprises a second dimension, and the training unit is further configured to update the initial model in the second dimension M times, wherein M is an integer greater than or equal to 1.

18. The apparatus according to claim 17, wherein in the M times of updating the initial model by the training unit in the second dimension, a process of updating the initial model in the second dimension once comprises:
inputting the first multivariate time series into the initial model, and outputting a fourth multivariate time series;
obtaining third mutual information based on the first multivariate time series and a second intermediate result, wherein the second intermediate result is high-dimensional mapping of the first multivariate time series in the second dimension, the third mutual information indicates impact of noise from dimensions on the prediction process, and the dimensions comprise the second dimension;
obtaining fourth mutual information based on the second multivariate time series and the second intermediate result, wherein the fourth mutual information indicates a relationship between representation and prediction;
updating the initial model based on the third mutual information and the fourth mutual information, to obtain an updated initial model; and
updating the updated initial model based on the first multivariate time series and the fourth multivariate time series.

19. The apparatus according to claim 17 or 18, wherein updating the initial model in the second dimension and updating the initial model in the first dimension are alternately performed according to a preset rule, and an initial model from a previous time of updating is used as an initial model in a subsequent update operation.

20. The apparatus according to any one of claims 17 to 19, wherein the first dimension is a feature dimension or a channel dimension, and the second dimension is a time dimension or a frequency dimension.

21. The apparatus according to claim 13 or 14, wherein the at least one dimension comprises a second dimension, and the training unit is specifically configured to update the initial model in the second dimension L times, wherein L is an integer greater than or equal to 1.

22. The apparatus according to any one of claims 13 to 21, wherein the apparatus further comprises:
a prediction unit, configured to obtain a sixth multivariate time series based on a fifth multivariate time series and the prediction model, wherein the sixth multivariate time series is a prediction result of the prediction model for a multivariate time series that appears after the fifth multivariate time series.

23. The apparatus according to claim 22, wherein a scale of the fifth multivariate time series is the same as a scale of the first multivariate time series, and a scale of the sixth multivariate time series is the same as or different from a scale of the second multivariate time series.

24. An apparatus for calling a prediction model, comprising:
an obtaining unit, configured to obtain a prediction model, wherein the prediction model is a trained model used to predict a multivariate time series, the prediction model is constrained by an information bottleneck constraint in a training process, and the information bottleneck constraint is used to suppress noise of the multivariate time series in a training sample; and
a prediction unit, configured to obtain a second multivariate time series based on the prediction model and a first multivariate time series, wherein the second multivariate time series is a prediction result of the prediction model for a multivariate time series that appears after the first multivariate time series.

25. A communication apparatus, wherein the communication apparatus comprises a memory and a processor;
the memory is configured to store instructions; and
the processor is configured to execute the instructions in the memory, to perform the method according to any one of claims 1 to 12.

26. A storage medium, wherein the storage medium comprises instructions, and when the instructions are run on a processor, the processor is enabled to perform the method according to any one of claims 1 to 12.
